# EUROPÄISCHE PATENTSCHRIFT

(11) **EP 2 387 740 B1**
(45) Veröffentlichungstag und Bekanntmachung des Hinweises auf die Patenterteilung: **02.04.2014**
(21) Anmeldenummer: 09810876.4
(22) Anmeldetag: 30.12.2009
(51) Int. Cl.: F16K 11/074, F16K 11/22, F16K 37/00, F16K 11/00, G05D 23/13, F16K 31/04

(54) **ELEKTRONISCH REGELBARE MISCHVORRICHTUNG FÜR LEITUNGSWASSER**
ELECTRONICALLY CONTROLLABLE MIXING DEVICE FOR TAP WATER
DISPOSITIF MITIGEUR À RÉGULATION ÉLECTRONIQUE POUR L'EAU DE DISTRIBUTION

(30) Priorität: 16.01.2009 DE 202009000525 U
(43) Veröffentlichungstag der Anmeldung: 23.11.2011
(73) Patentinhaber: Flühs Drehtechnik GmbH, 58515 Lüdenscheid (DE)
(72) Erfinder: THURAU, Friedrich, 58849 Herscheid (DE); LANGE, Lutz, 58511 Lüdenscheid (DE)
(74) Vertreter: Dörner, Kötter & Kollegen
(86) Internationale Anmeldenummer: PCT/DE2009/001827
(87) Internationale Veröffentlichungsnummer: WO 2010/081458

(56) Entgegenhaltungen:
- EP-A2- 0 320 564
- WO-A1-98/26339
- DE-A1- 3 641 998
- US-A- 4 756 030
- US-A- 4 768 705
- US-A1- 2006 231 638
- US-A1- 2008 006 707

## Beschreibung

Die Erfindung betrifft eine elektronisch regelbare Mischvorrichtung für Leitungswasser nach dem Oberbegriff des Patentanspruchs 1.

Bei der Zuführung von Wasser, insbesondere in Küche und Bad, besteht regelmäßig die Anforderung, eine definierte Wassertemperatur sowie einen definierten Wasserdruck einstellen zu können. Zur Einstellung der Temperatur ist es bekannt, Thermostatmischer einzusetzen, welche über ein thermisches Element das Mischungsverhältnis eines Kaltwasserstroms sowie eines Warmwasserstroms regelt. Das Thermoelement ist dabei derart angeordnet, dass bedingt durch die thermische Ausdehnung des Elementes die Wasserströme beeinflusst werden. Die relative Position des Thermoelements kann über einen Einstellknopf variiert werden, wodurch die gewünschte Wassertemperatur einstellbar ist. Die Einstellung des Wasserdrucks erfolgt über ein nachgeschaltetes Mengenventil, mit dem der Zufluss des Mischwasserstroms des Thermostatventils einstellbar ist. Die Einstellung erfolgt regelmäßig über Dreh- oder Kippeinrichtungen. Durch mechanische Einwirkungen, wie durch den Wasserdurchfluss indizierte Vibrationen oder durch den Verstellhebel anliegende Gewichtskräfte ist jedoch oftmals eine eigendynamische Verstellung bewirkt, welche eine Änderung der tatsächlich anliegenden Temperatur bzw. des tatsächlich anliegenden Wasserdrucks zur Folge hat und die ein Nachstellen der Parameter in unregelmäßigen Zeitabständen erforderlich machen kann. Derartige Mischvorrichtungen sind beispielsweise in der EP 0320 564 A2 sowie WO 98/26339 A1 offenbart.

Vor dem Hintergrund des Standes der Technik besteht zunehmend die Anforderung, die Temperatur und den Volumenstrom des Wassers komfortabel und zuverlässig einstellen zu können. Hier setzt die vorliegende Erfindung an. Der Erfindung liegt die Aufgabe zu Grunde, eine Mischvorrichtung für Leitungswasser zu schaffen, welche eine komfortable Regelung von Wasserdruck und -temperatur ermöglicht. Gemäß der Erfindung wird diese Aufgabe durch die Merkmale des kennzeichnenden Teils des Patentanspruchs 1 gelöst.

Mit der Erfindung ist eine Mischvorrichtung für Leitungswasser geschaffen, welche eine komfortable Regelung von Wassermengenstrom und -temperatur ermöglicht. Hierzu ist eine elektronische Steuer- und Regelvorrichtung vorgesehen, welche mit Sensoren zur Ermittlung des anliegenden Wassermengenstroms sowie der anliegenden Wassertemperatur verbunden ist und welche auf Basis der jeweils vorliegenden Messwerte der Sensoren eine vorgegebene Durchflussmenge und Temperatur des Wassermengenstroms gewährleistet.

Dabei ist das Mischventil derart ausgestaltet, dass im geschlossenen Zustand des Mischventils ein Vermischen der Mengenströme der Zuflussleitungen, an die es angeschlossen ist, verhindert ist. Hierdurch ist ein Rückfluss des Mengenstroms einer Zuflussleitung in die andere auf Grund unterschiedlich anliegender Druckverhältnisse verhindert. Ein üblicherweise zu diesem Zweck vorgesehener Rückflussverhinderer erübrigt sich.

In Weiterbildung der Erfindung ist das Mengenventil als Mehrwegeventil ausgebildet. Hierdurch ist zusätzlich eine Zuordnung des Wassermengenstromes zu einen von mehreren Abläufen ermöglicht, wie es beispielsweise bei Badezimmerarmaturen zur Umschaltung zwischen Badewannenzulauf und Duschzulauf erforderlich ist.

In Ausgestaltung der Erfindung ist das Mehrwegeventil derart ausgebildet, dass über die Spindel sowie die Zuordnung des zu versorgenden Ablaufs als auch die Durchflussmenge des Wassermengenstroms einstellbar ist. Hierdurch ist eine einfache Steuerbarkeit des Ventils ermöglicht.

In Weiterbildung der Erfindung sind Mischventil und Mengenventil über eine Leitung miteinander verbunden, in der ein Durchflusssensor zur Messung des Wassermengenstroms angeordnet ist. Hierdurch ist eine kontinuierliche Messung des von dem Mischventil bereitgestellten Wassermengenstroms ermöglicht.

In weiterer Ausgestaltung der Erfindung ist in dem Mehrwegeventil ein Temperatursensor zur Ermittlung der Temperatur des über das Mischventil zugeleiteten Wassermengenstroms angeordnet. Hierdurch ist eine verbrauchsnahe Temperaturmessung bewirkt, wodurch Temperaturbeeinträchtigungen durch nachfolgende Leitungswege vermieden sind. Bevorzugt ist der Temperatursensor im Zufluss des Mehrwegeventils angeordnet.

In Weiterbildung der Erfindung ist der Temperatursensor in der Spindel des Mehrwegeventils angeordnet. Hierdurch ist eine optimale Positionierung des Sensors im Wassermengenstrom erzielt.

In Ausgestaltung der Erfindung ist das Mischventil mit einem Antrieb verbunden, über den es betätigbar ist und der mit der Steuer- und Regeleinrichtung verbunden ist. Hierdurch ist eine direkte Ansteuerung über die Steuer- und Regeleinrichtung ermöglicht. Vorteilhaft ist das Mehrwegeventil ebenfalls mit einem Antrieb verbunden, über den es betätigbar ist und der mit der Steuer- und Regeleinrichtung verbunden ist.

In weiterer Ausgestaltung der Erfindung umfasst wenigstens ein Antrieb einen Elektromotor, der eine Welle antreibt, die über eine Verzahnung mit der Spindel des Mischventils bzw. Mengenventils verbunden ist. Hierdurch ist eine exakte Einstellung der Ventile über die Steuer- und Regelvorrichtung ermöglicht.

Vorteilhaft weisen sowohl das Mischventil als auch das Mengenventil ein Kopfstück auf, dass von einer in diesem radial geführten Spindel mittig durchsetzt ist, und in das seitlich wenigstens ein Fenster eingebracht ist und das auf seiner der Spindel entgegengesetzten Seite eine Durchlassscheibe mit zwei Durchtrittsöffnungen aufnimmt, wobei die Durchflussrichtung des Wasserstromes in dem Mengenventil entgegensetzt der Durchflussrichtung im Mischventil ist. Hierdurch ist die parallele Anordnung von Zufluss- und Abflussleitungen er-möglicht. Weiterhin können hierdurch weitgehend identische Ventiloberteile zum Einsatz kommen, wodurch Fertigungs- und Lagerkosten reduziert sind.

Andere Ausgestaltungen und Weiterbildungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:

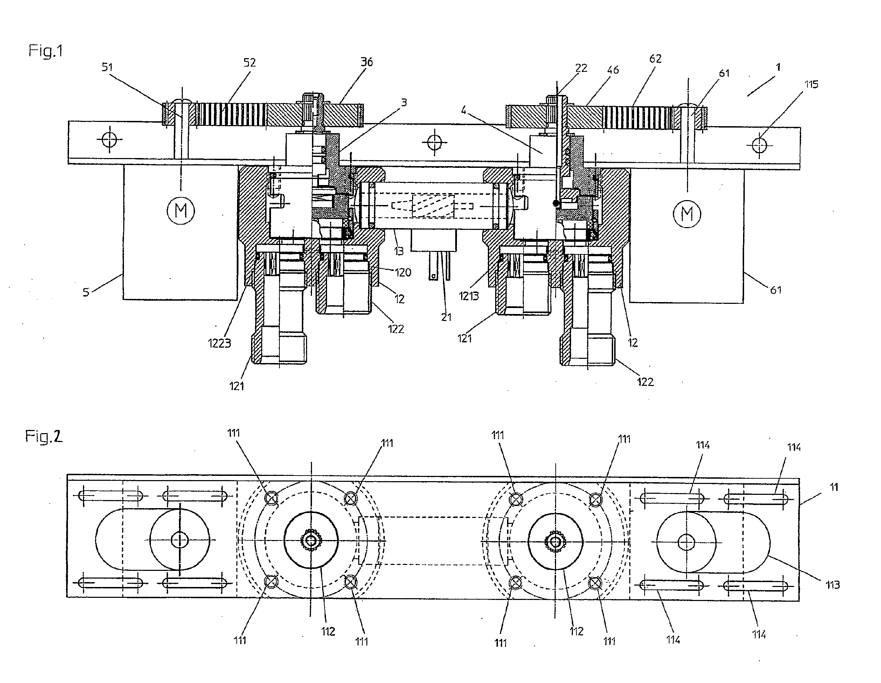

- Fig. 1: die Ansicht einer Mischvorrichtung im Teilschnitt; ,
- Fig. 2: die Mischvorrichtung aus Figur 1 in der Draufsicht;

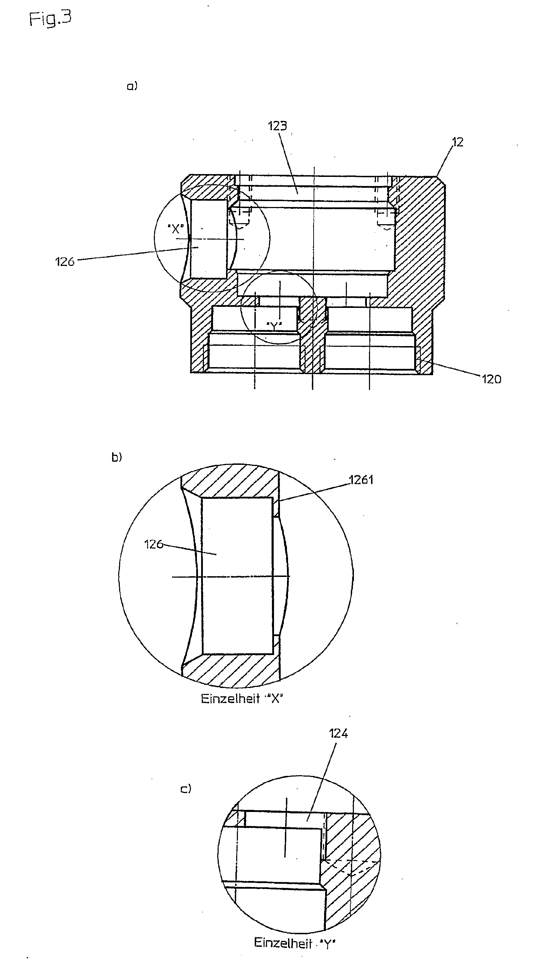

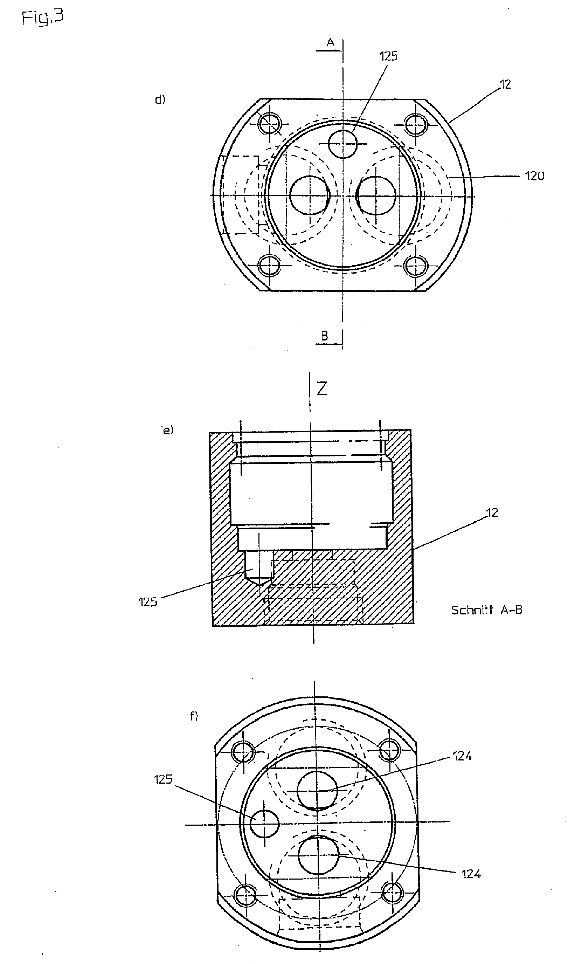

- Fig. 3: die Darstellung des ablaufsseitigen Gehäuseteils der Mischvorrichtung aus Figur 1
a) in Schnittdarstellung;
b) im Detailausschnitt "X" der Schnittdarstellung aus Figur a);
c) im Detailausschnitt "Y" der Schnittdarstellung aus Figur a);
d) in der Ansicht von oben;
e) in Schnittdarstellung entlang der Linie "A-B" aus Figur d);
f) in der Draufsicht "Z" der Ansicht aus Figur e);

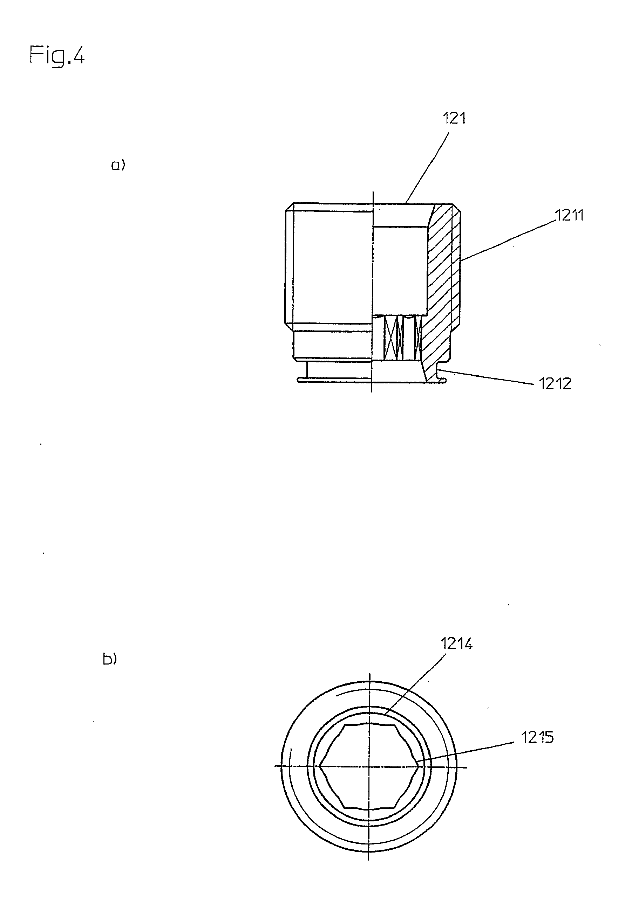

- Fig. 4: die Darstellung des kurzen Anschlussstücks des Gehäuseteils aus Figur 1
a) im Teilschnitt;
b) in der Draufsicht;

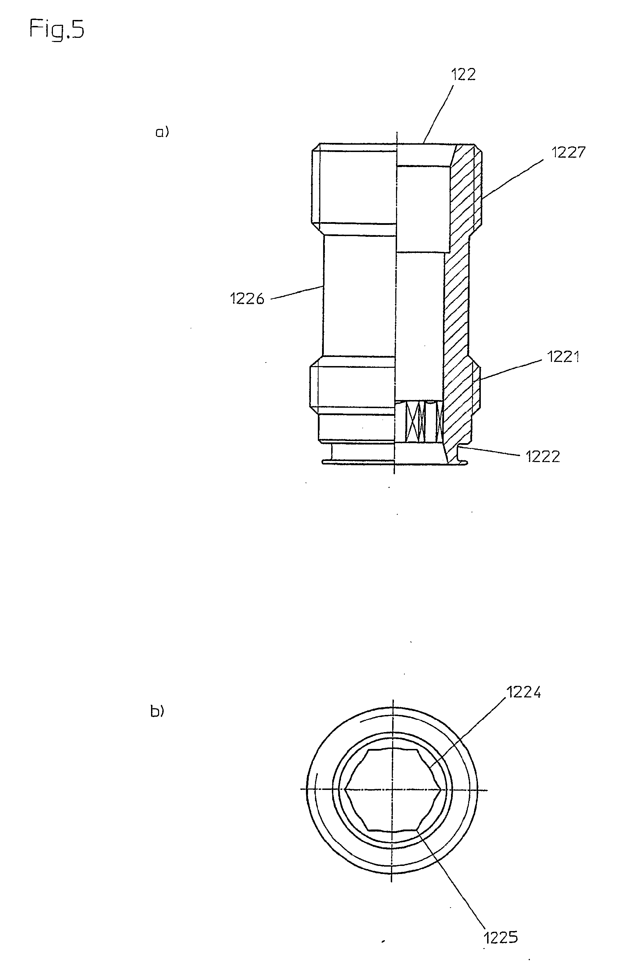

- Fig. 5: die Darstellung des langen Anschlussstücks des ablaufseitigem Gehäuseteils aus Figur 1
a) im Teilschnitt;
b) in der Draufsicht;

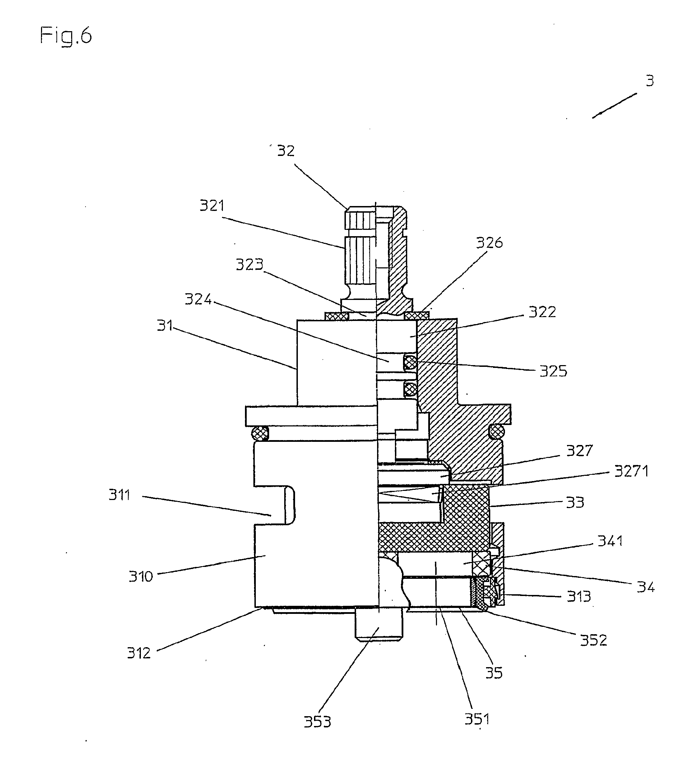

- Fig. 6: die Darstellung des Mischventiloberteils der Vorrichtung aus Figur 1 im Teilschnitt;
- Fig. 7: die Darstellung einer Steuerscheibe des Mischventiloberteils aus Figur 6
a) in der Ansicht von unten;
b) im Axialschnitt;
c) in der Draufsicht;
- Fig. 8: die Darstellung der Einlassscheibe des Mischventiloberteils aus Figur 6
a) in der Draufsicht;
b) in Schnittdarstellung entlang der Linie B-B in Figur a);
c) in Schnittdarstellung entlang der Linie C-C in Figur a);
d) in der Ansicht von unten;
- Fig. 9: die Darstellung des Mehrwegeventiloberteils des aus Figur 1 im Teilschnitt und
- Fig. 10: die Darstellung der Einlassscheibe des Mehrwegeventiloberteils aus Figur 9
a) in der Draufsicht;
b) in Schnittdarstellung entlang der Linie B-B in Figur a);
c) in Schnittdarstellung entlang der Linie C-C in Figur a);
d) in der Ansicht von unten.

Die als Ausführungsbeispiel gewählte Mischvorrichtung 1 umfasst eine Schiene 11, an der nebeneinander zwei Gehäuseteile 12 angeordnet sind, welche über eine Leitung 13 miteinander verbunden sind, in der ein Durchflusssensor 21 angeordnet ist. Das eine, zulaufseitige Gehäuseteil 12 nimmt ein Mischventiloberteil 3 auf und ist mit zwei Anschlussstücken 121, 122 versehen. Das andere, ablaufseitige Gehäuseteil 12 nimmt ein Mehrwegeventiloberteil 4 auf und ist ebenfalls mit zwei Anschlussstücken 121, 122 versehen. Weiterhin sind zwei Elektromotoren 5, 6 zur Betätigung des Mischventiloberteils 3 bzw. des Mehrwegeventiloberteils 4 angeordnet.

Die Schiene 11 ist im Ausführungsbeispiel als rechteckiges Metallblech ausgebildet, welches an einer Längsseite rechtwinklig abgewinkelt ist. In der Schiene 11 sind Bohrungen 111 zur Befestigung der beiden Gehäuseteile 12 eingebracht. Dabei sind jeweils vier Bohrungen 111 derart angeordnet, dass sie gleichmäßig beabstandet eine mittig zwischen diesen eingebrachte kreisförmige Ausnehmung 112 umgeben, welche dem Durchtritt eines Ventiloberteils 3, 4 dient. Zu beiden Enden der Schiene 11 ist in diese jeweils eine längliche Aussparung 113 eingebracht, welche dem Durchtritt der Welle 51, 61 eines Elektromotors 5, 6 dient und die von jeweils vier Langlöchern 114 zur verstellbaren Befestigung eines Elektromotors 5, 6 an der Schiene 11 flankiert werden. Weiterhin sind im abgewinkelten Bereich der Schiene 11 Bohrungen 115 zur Befestigung der Vorrichtung 1 vorgesehen.

Die Gehäuseteile 12 sind identisch ausgebildet und im Ausführungsbeispiel als im Wesentlichen zylindrische Messinghohtkörper ausgebildet. An ihrer der Schiene 11 abgewandten Unterseite sind in das Gehäuse 12 zwei Gewindebohrungen 120 eingebracht, in die Anschlussstücke 121, 122 eingeschraubt sind. An ihrer der Schiene 11 zugewandten Oberseite ist in das Gehäuseteil 12 eine Bohrung 123 als Ventilsitz zur Aufnahme eines Ventiloberteils 3,4 eingebracht. In den Grund der Bohrung 123 sind diametral zueinander zwei Durchflussbohrungen 124 eingebracht; welche in den Gewindebohrungen 120 münden. Weiterhin ist zwischen den Bohrungen 124 in den Grund der als Ventilsitz dienenden Bohrung 123 eine Sackbohrung 125 angeordnet.

Seitlich ist in das Gehäuseteil 12 eine Bohrung 126 eingebracht, welche in der als Ventilsitz dienenden Bohrung i 23 mündet. In der Bohrung 126 ist ein Absatz 1261 angeformt, der als Anschlag für die Leitung 13 dient, die zur Abdichtung gegenüber dem Gehäuseteil 12 mit einem O-Ring 131 versehen ist.

Die Anschlussstücke 121, 122 sind in Art eines Rohrstücks ausgebildet und dienen dem Anschluss von Zulauf- bzw. Ablaufleitungen an den Gehäuseteilen 12. Das Anschlussstück 121 ist als kurzes Anschlussstück ausgebildet und weist ein Außengewinde 1211 auf, welches mit dem Innengewinde der Gewindebohrung 120 korrespondiert. Im Ausführungsbeispiel ist das Außengewinde 1211 als 1/2-Zoll-Gewinde ausgeführt.

An seinem der Schiene 11 zugewandten Ende ist in dem Anschlussstück 121 außen umlaufend eine Nut 1212 zur Aufnahme eines O-Rings 1213 eingebracht. Innen ist in dem Anschlussstück 121 im Bereich der Nut 1212 ein Absatz 1214 angeformt, in dem umlaufend in gleichmäßigen Abständen sechs Kerben 1215 eingebracht sind.

Das gegenüber dem Anschlussstück 121 länger ausgebildete Anschlussstück 122 weist ebenfalls ein Außengewinde 1221 auf, welches mit dem Innengewinde der Gewindebohrung 120 des Gehäuses 12 korrespondiert und an das sich eine Nut 1222 zur Aufnahme eines O-Rings 1223 anschließt. Gleichsam ist auf der Innenseite ein Absatz 1224 angeordnet, der mit sechs gleichmäßig zueinander beabstandeten Kerben 1225 versehen ist. An das Außengewinde 1221 schließt sich ein zylindrischer Abschnitt 1226 an, der in ein zweites Außengewinde 1227 übergeht. Im Ausführungsbeispiel sind beide Außengewinde 1221, 1227 als 1/2-Zoll-Gewinde ausgeführt.

Das als Ausführungsbeispiel gewählte Mischventiloberteil 3 weist ein Kopfstück 31 auf, das von einer in ihm radial geführten Spindel 32 mittig durchsetzt ist. Mit der Spindel 32 ist eine Steuerscheibe 33 formschlüssig verbunden und im Kopfstück 31 radial geführt. An dem der Spindel 32 abgewandten Seite der Steuerscheibe 33 ist eine Einlassscheibe 34 in dem Kopfstück 31 vorgesehen, an die sich eine Anschlussscheibe 35 anschließt, die mit dem durch die Bohrung 123 gebildeten Ventilsitz des Gehäuseteils 12 zur Anlage kommt.

Das Kopfstück 31 besteht aus einem symmetrischen Hohlkörper, dessen beiden Stirnflächen offen sind. Auf seiner dem Gehäuseteil 12 zugewandten Seite weist das Kopfstück 31 einen hülsenartigen Teil 310 auf. In dem Teil 310 sind zwei Durchtrittsfenster 311 vorgesehen.

Nach dem Einbringen in das Gehäuseteil 12 liegt ein Bund 312 des Kopfstücks 31 auf dem Grund der als Ventilsitz dienenden Bohrung 123 auf. In dem hülsenartigen Teil 310 ist innen im Bereich des Bundes 312 eine Hinterdrehung 313 angeordnet.

Die Spindel 32 ist im Wesentlichen massiv ausgeführt. Sie ist an ihrer dem Kopfstück 31 abgewandten Stirnseite außen als Aussenvielkant 321 ausgeführt. Anschließend ist außen an der Spindel 32 eine Zylinderfläche 322 vorgesehen, mit der die Spindel 32 in dem Kopfstück 31 radial geführt ist. Zwischen der Zylinderfläche 322 und dem Aussenvielkant 321 ist ein Einstich 323 vorgesehen, in den eine Wellensicherung 326 in Form eines Sprengrings federnd eingelegt ist. Die Wellensicherung 326 verhindert das Eindringen der Spindel 32 in das Kopfstück 31 über das vorgesehene Maß hinaus. Weiterhin sind der in der Zylinderfläche 322 zwei Ringnuten 324 eingebracht, die O-Ringe 325 aufnehmen. Auf der dem Aussenvielkant 321 entgegengesetzten Seite der Spindel 32 ist eine Scheibe 327 angeformt, die auf ihrer dem Gehäuseteil 12 zugewandten Seite einen Mitnehmer 3271 aufweist.

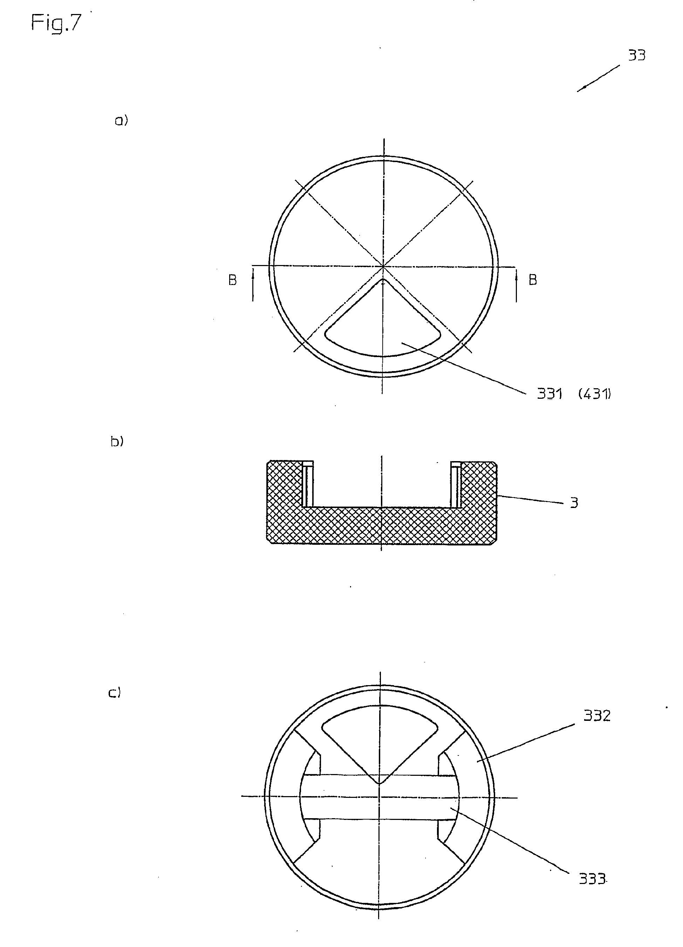

Die Steuerscheibe 33 ist im Wesentlichen als kreisrunde Scheibe ausgebildet, aus der ein Kreisausschnitt 331 ausgenommen ist. Der Kreisausschnitt 331 weist im Ausführungsbeispiel einen Winkel von ca. 90° auf. Auf ihrer der Spindel 32 zugewandten Seite weist die Steuerscheibe 3 zwei diametral zueinander angeordnete bogenförmige Absätze 332 auf. Der ringförmige Absatz 332 umfasst in montiertem Zustand den Mitnehmer 3271 der Spindel 32. An den Absätzen 332 sind Ausnehmungen 333 ausgebildet, in die der Mitnehmer 3271 fasst (vgl. Figur 7 c)).

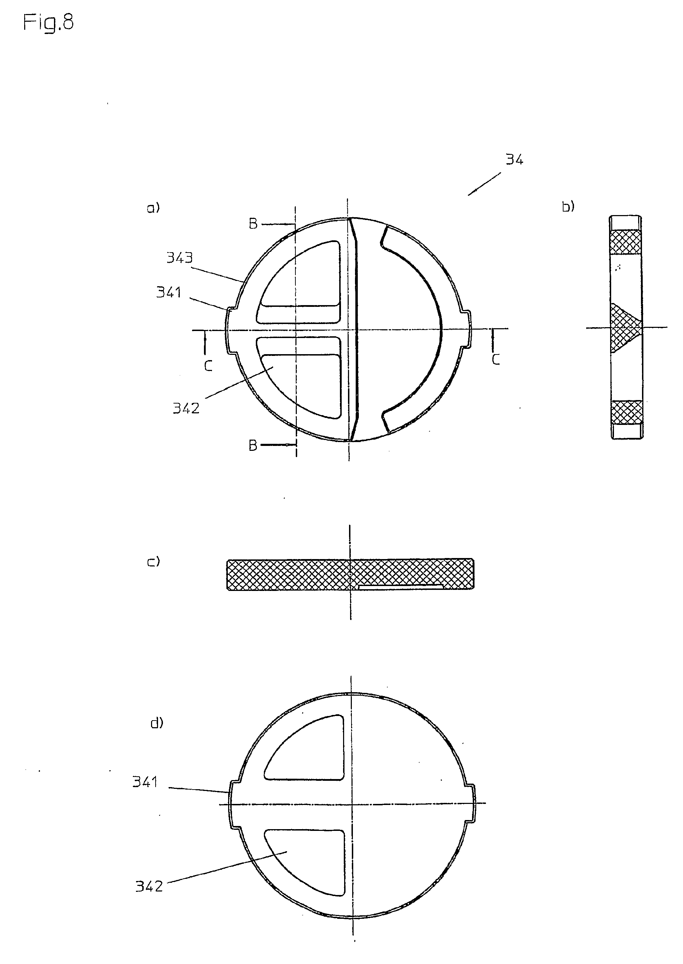

Die Einlassscheibe 34 ist in Figur 8 dargestellt Sie weist auf ihrem Umfang zwei sich diametral gegenüberliegende Nasen 341 auf. Mit den Nasen 341 fasst die Scheibe 34 in Ausnehmungen, die hierzu in dem hülsenförmigen Teil 310 des Kopfstücks 31 vorgesehen sind. Die Einlassscheibe 34 ist damit drehfest in dem Kopfstück 31 angeordnet. Die Einlassscheibe weist zwei nebeneinander angeordnete Kreisausschnitte 342 auf, die mit dem Kreisausschnitt 331 der Steuerscheibe 33 korrespondieren. Außen sind umlaufend der Kreisausschnitte 342 sowie im Bereich der Nasen 341 auf der der Steuerscheibe 33 abgewandten Unterseite der Einlassscheibe 34 stegartige Konturen 343 angeformt.

Die Anschlussscheibe 35 ist im Ausführungsbeispiel aus Kunststoff hergestellt. Sie weist auf ihrem Umfang ebenfalls zwei sich diametral gegenüberliegende Nasen auf, mit denen sie in Ausnehmungen, die hierzu in dem hülsenförmigen Teil 310 des Kopfstücks 31 vorgesehen sind, eingreift. Sie ist damit drehfest in dem Kopfstück 31 angeordnet. Die Anschlussscheibe 35 weist zwei nebeneinander angeordnete Durchtrittsöffnungen 351 auf, welche mit den beiden Kreisausschnitten 342 der Einlassscheibe 34 in Überdeckung positionierbar sind und in denen jeweils eine Lippendichtung 352 zur Abdichtung gegenüber dem durch die Bohrung 123 gebildeten Ventilsitz des Gehäuseteils 12 angeordnet ist. Weiterhin weist die Anschlussscheibe 35 auf ihrer der Einlassscheibe 34 abgewandten Unterseite einen zylinderförmigen Stift 353 auf, der mit der Sackbohrung 125 des Gehäuseteils 12 korrespondiert und der Positionierung des Mischventiloberteils 3 in dem Gehäuseteil 12 dient.

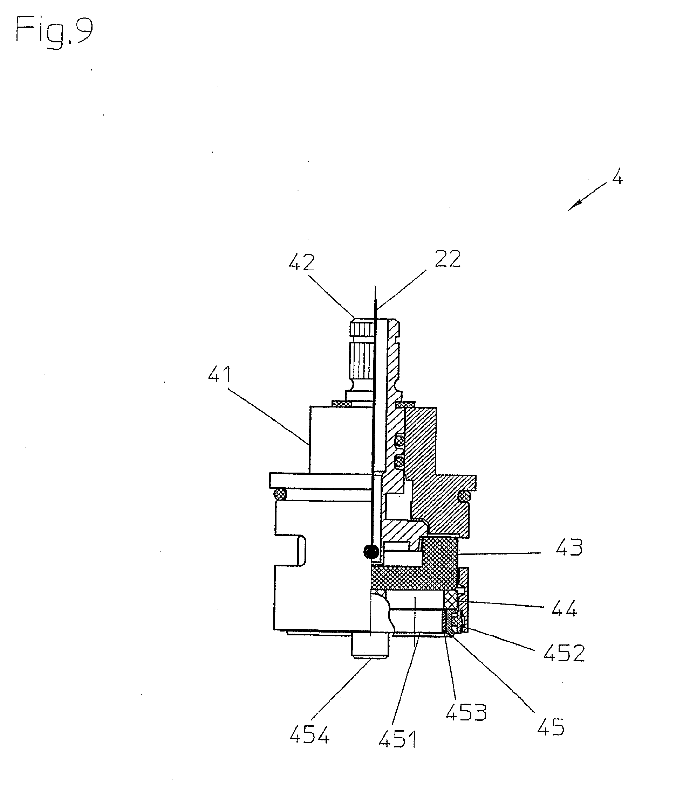

Das Mehrwegeventiloberteil 4 ist weitgehend identisch zu dem Mischventiloberteil 3 aufgebaut. Es weist ein identisches Kopfstück 41 auf, das von einer in ihm radial geführten Spindel 42 mittig durchsetzt ist. In der Spindel 42 ist zusätzlich ein thermischer Sensor 22 zur kontinuierlichen Messung der Temperatur des von dem Mischventiloberteil 3 zugeleiteten Wassers angeordnet (vgl. Figur 9). Mit der Spindel 42 ist ebenfalls eine Steuerscheibe 43 formschlüssig verbunden und im Kopfstück 41 radial geführt. Gleichfalls ist eine Einlassscheibe 44 in dem Kopfstück 41 vorgesehen, an die sich eine Anschlussscheibe 45 anschließt, die mit dem durch die Bohrung 123 gebildeten Ventilsitz des Gehäuseteils 12 zur Anlage kommt. Das Mehrwegeventil 4 unterscheidet sich vom Mischventil 3 lediglich durch die unterschiedlichen zum Einsatz kommende Einlassscheibe 44 und die Anschlussscheibe 45.

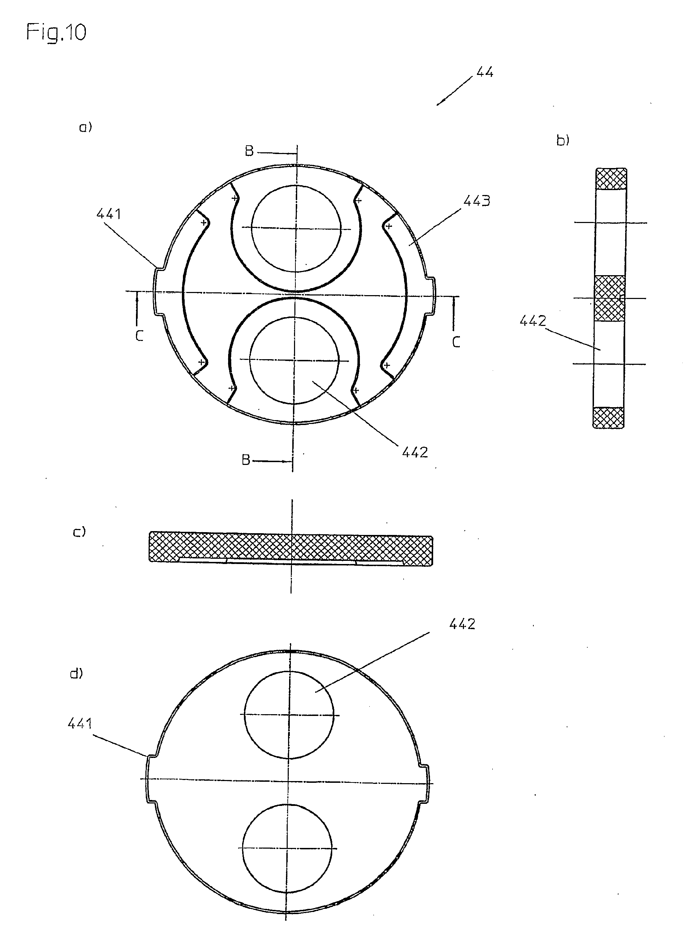

Die Einlassscheibe 44 des Mehrwegeventiloberteils 4 ist in Figur 10 dargestellt. Sie weist im Gegensatz zur Einlassscheibe 34 des Mischventiloberteils 3 zwei kreisrunde, diametral zueinander angeordnete Durchtrittsöffnungen 442 auf. Außen sind umlaufend der Durchtrittsöffnungen 442 sowie im Bereich der seitlich angeformten Nasen 441 auf der der Anschlussscheibe 45 zugewandten Unterseite der Einlassscheibe 44 stegartige Konturen 443 angeformt.

Die Anschlussscheibe 45 weist im Gegensatz zur Anschlussscheibe 35 des Mischventiloberteils 3 zwei kreisrunde, diametral zueinander angeordnete Durchtrittsöffnungen 451 auf, welche mit den Durchtrittsöffnungen 442 der Einlassscheibe 44 fluchten. In den Durchtrittsöffnungen 442 ist innen umlaufend jeweils ein - nicht dargestellter - Steg zur Aufnahme einer Lippendichtung 452 angeformt. Die Lippendichtung 452 ist über einen eingebrachten Stützring 453 in der Durchtrittsöffnung 451 gehalten. Im montierten Zustand liegen die Lippen der Lippendichtung 452 dichtend gegen die Einlassscheibe 44 sowie gegen den Grund der als Ventilsitz dienenden Bohrung 123 des Gehäuseteils 12 an. Weiterhin weist die Anschlussscheibe 45 auf ihrer der Einlassscheibe 44 abgewandten Unterseite einen zylinderförmigen Stift 454 auf, der mit der Sackbohrung 125 des Gehäuseteils 12 korrespondiert und der Positionierung des Mehrwegeventiloberteils 4 in dem Gehäuseteil 12 dient.

Die Gehäuseteile 2 sind mittels - nicht dargestellter - Schrauben, welche durch die Bohrungen 111 der Schiene 11 geführt sind, an der Schiene 11 befestigt, derart, dass das in dem jeweiligen Gehäuseteil 12 eingebrachte Ventiloberteil 3, 4 mit seinem Kopfstück 31, 41 durch eine Ausnehmung 112 der Schiene 11 hindurchragt. Die Gehäuseteile 12 sind über die Leitung 13, welche mit jeweils einem Ende an dem Absatz 1261 eines Gehäuseteils 12 anliegt, miteinander verbunden. An ihrer der Leitung 13 gegenüberliegenden Seite ist an jedem Gehäuseteil 12 jeweils ein Elektromotor 5, 6 angeordnet, der mittels - nicht dargestellter - Schrauben, welche durch die Langlöcher 114 der Schiene 11 geführt sind, mit der Schiene 11 verbunden ist, derart, dass die Motorwelle 51, 61 des jeweiligen Motors 5, 6 durch die Aussparung 113 der Schiene 11 hindurchragt. Über die Langlöcher 114 sind die Motoren 5, 6 entlang der Längsachse der Aussparungen 113 justierbar. An der den Motoren 5, 6 gegenüberliegenden Seite der Schiene 11 sind die Wellen 51, 61 der Motoren 5, 6 mit einer Zahnscheibe 52, 62 verbunden, welche mit einer Zahnscheibe 36, 46 im Eingriff steht, die wiederum mit dem Außenvierkant der Spindel 32, 42 der Ventiloberteile 3, 4 verbunden ist. Eine Rotation der Welle 51, 61 eines Motors 5, 6 wird hierdurch gegenläufig auf eine Spindel 32, 42 eines Ventiloberteils 3, 4 übertragen, welches hierdurch bedienbar ist.

Eine - nicht dargestellt - Steuer- und Regeleinrichtung ist eingangsseitig mit dem Durchflusssensor 21 sowie dem Temperatursensor 22 verbunden. Weiterhin ist eingangsseitig eine - nicht dargestellte- Eingabeeinheit angeordnet, mittels der benutzerseitig Vorgaben hinsichtlich der Wassertemperatur, des Wassermengenstroms sowie des Wasserablaufs (Badewanne/Dusche) einstellbar sind. Ausgangsseitig ist die - nicht dargestellte - Steuer- und Regeleinrichtung elektronisch mit den Motoren 5, 6 verbunden.

Im montierten Zustand ist die Mischvorrichtung zulaufseitig über das Anschlussstück 121 mit einem Kaltwasserzulauf und über das Anschlussstück 122 mit einem Warmwasserzulauf verbunden. Das ablaufseitige Gehäuseteil ist über das Anschlussstück 121 mit einem Wasserhahn einer Badewanne und über das Anschlussstück 122 mit dem Zulauf eines Duschkopfes verbunden. Nach Eingabe der gewünschten Wassertemperatur, Wassermenge sowie des gewünschten Ablaufs, das heißt die Auswahl zwischen Wasserhahn und der Badewanne oder dem Duschkopf werden die Ventiloberteile 3, 4 über die Motoren 5, 6 derart eingestellt, dass die über die Sensoren 21, 22 übermittelten Messwerte mit den gewählten Vorgabedaten übereinstimmen. Dabei wird über das Mischventiloberteil 3 die gewünschte Wassertemperatur eingestellt, welche im Zulauf des Mehrwegeventiloberteils 4 über den Sensor 22 kontinuierlich gemessen wird. Über das Mehrwegeventiloberteil 4 erfolgt zum einen die Zuordnung des von dem Mischventiloberteil 3 bereitgestellten Wassermengenstroms zur Badewanne oder zur Dusche; zum anderen ist über das Mehrwegeventiloberteil 4 durch Einstellung der Überdeckung des Kreisausschnitts 431 der Steuerscheibe 43 mit der Durchtrittsöffnung 442 der Einlassscheibe 44 bzw. mit dieser korrespondierenden Durchtrittsöffnung 451 der Anschlussscheibe 45 eine Änderung des Wassermengenstroms ermöglicht. Der jeweils erzielte Wassermengenstrom wird über den Durchflusssensor 21 an die - nicht dargestellte - Steuer- und Regeleinrichtung gemeldet, welche bei Abweichung zum eingestellten Vorgabewert eine Nachregelung des Mehrwegeventiloberteils 4 über den Motor 6 vornimmt. Gleichsam erfolgt eine Nachregelung des Mischventiloberteils 3 über den Motor 5 bei Abweichungen zwischen dem von dem Temperatursensor 22 gemessenen Realwert zum voreingestellten Temperatur-Sollwert.

## Patentansprüche

1. Mischvorrichtung für Leitungswasser, umfassend ein Mischventil und ein Mengenventil, welche jeweils über eine Spindel betätigbar sind und die hintereinander geschaltet angeordnet sind wobei Sensoren (21, 22) zur Ermittlung von Wassermengenstrom und -temperatur angeordnet sind, die mit einer Steuer- und Regelvorrichtung verbunden sind, über welche die Durchflussmenge und Temperatur des Wassermengenstroms einstellbar ist, **dadurch gekennzeichnet, dass** sowohl das Mischventil (3) als auch das Mengenventil (4) ein Kopfstück (31, 41) aufweisen, das von einer in diesem radial geführten Spindel (32, 42) mittig durchsetzt ist, und in das seitlich wenigstens ein Fenster (311) eingebracht ist und das auf seiner der Spindel (32, 42) entgegengesetzten Seite eine Einlassscheibe (34, 44) mit zwei Durchtrittsöffnungen (351, 451) aufnimmt, wobei die Durchflussrichtung des Wassermengenstroms in dem Mengenventil (4) entgegengesetzt der Durchflussrichtung im Mischventil (3) ist und dass das Mischventil derart gestaltet ist, dass im geschlossenen Zustand des Mischventils ein Vermischen der Mengenströme der Zuflussleitungen, an die es angeschlossen ist, verhindert ist.

2. Vorrichtung nach Anspruch 1, **dadurch gekennzeichnet, dass** das Mengenventil als Mehrwegeventil (4) ausgebildet ist.

3. Vorrichtung nach Anspruch 2, **dadurch gekennzeichnet, dass** das Mehrwegeventil (4) derart ausgebildet ist, dass über die Spindel (42) sowohl die Zuordnung des zu versorgenden Ablaufs als auch die Durchflussmenge des Wassermengenstroms einstellbar ist.

4. Vorrichtung nach einem der vorgenannten Ansprüche, **dadurch gekennzeichnet, dass** Mischventil (3) und Mengenventil (4) über eine Leitung (13) miteinander verbunden sind, in der ein Durchflusssensor (21) zur Messung des Wassermengenstroms angeordnet ist.

5. Vorrichtung nach einem der vorgenannten Ansprüche, **dadurch gekennzeichnet, dass** in dem Mengenventil (4) ein Temperatursensor (22) zur Ermittlung der Temperatur des über das Mischventil (5) zugeleiteten Wassermengenstroms angeordnet ist.

6. Vorrichtung nach Anspruch 5, **dadurch gekennzeichnet, dass** der Temperatursensor (22) im Zufluss des Mengenventils (4) angeordnet ist.

7. Vorrichtung nach Anspruch 6, **dadurch gekennzeichnet, dass** der Temperatursensor (22) in der Spindei (42) des Mengenventils (4) angeordnet ist.

8. Vorrichtung nach einem der vorgenannten Ansprüche, **dadurch gekennzeichnet, dass** das Mischventil (3) mit einem Antrieb (5) verbunden ist, über den es betätigbar ist und der mit der Steuer- und Regeleinrichtung verbunden ist.

9. Vorrichtung nach einem der vorgenannten Ansprüche, **dadurch gekennzeichnet, dass** das Mengenventil (4) mit einem Antrieb (6) verbunden ist, über den es betätigbar ist und der mit der Steuer- und Regeleinrichtung verbunden ist.

10. Vorrichtung nach Anspruch 8 oder 9, **dadurch gekennzeichnet, dass** wenigstens ein Antrieb (5, 6) einen Elektromotor umfasst, der eine Welle (51, 61) antreibt, die über eine Verzahnung (52, 62) mit der Spindel (32, 42) des Mischventils (3) bzw. Mengenventils (4) verbunden ist.

## Claims

1. Electronically controllable mixing device for tap water, comprising a mixing valve and a flow control valve, each of which can be operated by means of a spindle and which are disposed one behind the other in a circuit, where sensors (21, 22) for determining the water flow rate and water temperature are disposed, which sensors (21, 22) are connected to a control and regulation device by means of which the flow rate and temperature of the water can be adjusted, **characterised in that** both the mixing valve (3) and the flow control valve (4) incorporate a head member (31, 41) through the centre of which runs a spindle (32, 42) guided radially in it and in the side or sides of which opposite to the spindle (32, 42) one or more windows (311) is or are disposed and into the side of which an inlet disk (34, 44) having two through-holes (351, 451) fits, where the direction of throughflow of the water in the flow control valve (4) is contrary to the direction of flow in the mixing valve (3) and **in that** the mixing valve is designed so that, when it is closed, the flows in the feed lines to which it is connected cannot mix

2. Device in accordance with claim 1, **characterised in that** the flow control valve is constructed as a multi-way valve (4).

3. Device in accordance with claim 2, **characterised in that** the multi-way valve (4) is constructed so that both the change-over to the discharge to be supplied and the water throughflow rate can be adjusted by means of the spindle (42).

4. Device in accordance with any one of the aforementioned claims, **characterised in that** the mixing valve (3) and the flow control valve (4) can be connected to each other by means of a pipe (13) in which a throughflow sensor (21) to measure the water flow rate is disposed.

5. Device in accordance with any one of the aforementioned claims, **characterised in that** a temperature sensor (22) to determine the temperature of the water supplied through the mixing valve (5) is disposed in the flow control valve (4).

6. Device in accordance with claim 5, **characterised in that** the temperature sensor (22) is disposed in the feed to the flow control valve (4).

7. Device in accordance with claim 6, **characterised in that** the temperature sensor (22) is disposed in the spindle (42) of the flow control valve (4).

8. Device in accordance with any one of the aforementioned claims, **characterised in that** the mixing valve (3) is connected to a drive element (5) by means of which it can be operated and which is connected to the control and regulation device.

9. Device in accordance with any one of the aforementioned claims, **characterised in that** the flow control valve (4) is connected to a drive element (6) by means of which it can be operated and which is connected to the control and regulation device.

10. Device in accordance with claim 8 or 9, **characterised in that** one or more drive elements (5, 6) comprises or comprise an electric motor that drives a shaft (51, 61) that is connected to the spindle (32, 42) of the mixing valve (3) or the flow control valve (4) by means of a set of teeth (52, 62).

## Revendications

1. Dispositif mitigeur pour l'eau de distribution comprenant un robinet mitigeur et une vanne de débit actionnables chacun via une broche et agencés en série, sachant que des capteurs (21, 22) sont agencés pour déterminer le débit volumique et la température du flux d'eau et qu'ils sont reliés à un dispositif de pilotage et de régulation via lequel il est possible de régler le débit volumique et la température du flux d'eau, **caractérisé en ce qu'**aussi bien le robinet mitigeur (3) que la vanne de débit (4) présentent une pièce têtière (31, 41) traversée en son milieu par une broche (32, 42) guidée radialement par cette tête, et **en ce que** sur le côté de ladite tête au moins une fenêtre (311) a été ménagée, et qui sur son côté opposé à la broche (32, 42) reçoit une rondelle d'admission (34, 44) comportant deux orifices (351, 451) de passage, sachant dans la vanne de débit (4) le flux d'eau circule en sens opposé à celui du flux dans le robinet mitigeur (3) et **en ce que** le robinet mitigeur est configuré de sorte que lorsqu'il se trouve à l'état fermé, un mélange des flux volumiques présents dans les conduites d'amenée soit empêché.

2. Dispositif selon la revendication 1, **caractérisé en ce que** la vanne de débit est configurée en vanne multivoies (4).

3. Dispositif selon la revendication 2, **caractérisé en ce que** la vanne multivoies (4) est configurée de sorte qu'il soit possible de régler, via la broche (42), aussi bien l'affectation du bec de sortie à alimenter que le débit volumique du flux d'eau.

4. Dispositif selon l'une des revendications précédentes, **caractérisé en ce que** le robinet mitigeur (3) et la vanne de débit (4) sont reliés entre eux via une conduite (13) dans laquelle est agencé un capteur (21) de débit permettant de mesurer le débit volumique de l'eau.

5. Dispositif selon l'une des revendications précédentes, **caractérisé en ce que** dans la vanne de débit (4) est agencé un capteur thermométrique (22) servant à déterminer la température du flux d'eau amené via le robinet mitigeur (5).

6. Dispositif selon la revendication 5, **caractérisé en ce que** le capteur de température (22) a été agencé dans l'arrivée de la vanne de débit (4).

7. Dispositif selon la revendication 6, **caractérisé en ce que** le capteur de température (22) a été agencé dans la broche (42) de la vanne de débit (4).

8. Dispositif selon l'une des revendications précitées, **caractérisé en ce que** le robinet mitigeur (3) est relié à un entraînement (5) via lequel il est possible de l'actionner, et qui est relié au dispositif de pilotage et de régulation.

9. Dispositif selon l'une des revendications précitées, **caractérisé en ce que** la vanne de débit (4) est reliée à un entraînement (6) via lequel il est possible de l'actionner, et qui est relié au dispositif de pilotage et de régulation.

10. Dispositif selon la revendication 8 ou 9, **caractérisé en ce qu'**au moins un entraînement (5, 6) comprend un moteur électrique entraînant un arbre (51, 61) relié via une denture (52, 62) avec la broche (32, 42) du robinet mitigeur (3) et de la vanne de débit (4).
